# EUROPEAN PATENT APPLICATION

(11) **EP 3 737 038 A1**
(43) Date of publication of application: **11.11.2020**
(21) Application number: 19741402.2
(22) Date of filing: 14.01.2019
(51) Int. Cl.: H04L 12/24

(54) **METHOD AND DEVICE FOR CONFIGURING BASE STATION**

(30) Priority: 18.01.2018 CN 201810050715
(71) Applicant: HUAWEI TECHNOLOGIES CO., LTD., Shenzhen, Guangdong 518129, (CN)
(72) Inventor: XU, Ruiyue, Shenzhen, Guangdong 518129 (CN)
(74) Representative: Maiwald Patent- und Rechtsanwaltsgesellschaft mbH
(86) International application number: PCT/CN2019/071673
(87) International publication number: WO 2019/141151

(57) **Abstract**

This application provides a base station configuration method and apparatus. During implementation of the base station configuration method, a management request sent by a network management unit to a network function management unit includes configuration information of a base station, and the configuration information may include at least one of a deployment mode and a virtualization mode. The network function management unit receives the management request sent by the network management unit, and configures the base station based on the configuration information included in the management request, so that the configuration information of the base station is sent by using the management request, and the management request may be transmitted by using a same interface between the NMF and the NFMF. Therefore, according to the base station configuration method provided in embodiments of this application, base stations in different deployment forms can be configured by using the same interface.

## Description

This application claims priority to Chinese Patent Application No. 201810050715.6, filed with the Chinese Patent Office on January 18, 2018 and entitled "BASE STATION CONFIGURATION METHOD AND APPARATUS", which is incorporated herein by reference in its entirety.

### TECHNICAL FIELD

This application relates to the field of communications technologies, and in particular, to a base station configuration method and apparatus.

### BACKGROUND

Abase station is an important network element device in a network that provides a physical radio link for a terminal and the network. Therefore, configuration of the base station is particularly important.

In different communications systems, the base station has different deployment forms. For example, in a fifth-generation (5G) communications system, the base station may be referred to as a next-generation base station (generation node base, gNB or GNB). Currently, the gNB is deployed in the following three forms.
Form 1: The gNB is not split, that is, the entire gNB is deployed as a unit.
Form 2: The gNB includes two types of components: a centralized unit (Centralized Unit, CU) and a distributed unit (Distributed Unit, DU), and the CU and the DU are independently deployed.
Form 3: The gNB includes three types of components: a centralized unit control plane (centralized unit control plan, CUCP), a centralized unit user plane (centralized unit user plan, CUUP) and a DU, and the CUCP, the CUUP, and the DU are independently deployed.

Further, the gNB also supports flexible deployment of some components on a virtualized infrastructure. For example, when the deployment form 2 is used, the CU component may be deployed on the virtualized infrastructure; or when the deployment form 3 is used, the CUCP component and the CUUP component may be deployed on the virtualized infrastructure.

Currently, for different deployment forms of the base station, different interfaces and models need to be configured between a network management unit (network management function, NMF) and a network function management unit (network function management function, NFMF). During the configuration of the base station, the NMF and the NFMF invoke an interface and a model that correspond to the deployment form, to configure the base station. However, in a 5G network, there are a large quantity of base stations, and different interfaces and models are invoked for processing different deployment forms, resulting in management complexity. In addition, with continuous network research, a future base station may have another deployment form. In this case, a new management interface and model need to be redefined each time a deployment form appears, and a new management system needs to be developed to independently manage the new deployment form, increasing costs.

### SUMMARY

Embodiments of this application provide a base station configuration method and apparatus, so that base stations in different deployment forms are configured by using a same interface.

According to a first aspect, an embodiment of this application provides a base station configuration method. In the method, a network management unit determines configuration information of a base station. The configuration information may include a deployment mode of the base station, a virtualization mode of the base station; or a deployment mode and a virtualization mode of the base station. The network management unit may send a management request to a network function management unit, and add the determined configuration information to the management request. The network function management unit receives the management request sent by the network management unit, and configures the base station based on the configuration information included in the management request. The configuration information includes at least one of the deployment mode and the virtualization mode, and the configuration information is sent by using the management request. The management request may be transmitted by using a same interface between the network management unit and the network function management unit. Therefore, according to this embodiment of this application, base stations in different deployment forms can be configured by using the same interface.

The deployment mode in this embodiment of this application includes a non-split mode or a split mode. The split mode includes a mode in which the base station is split into a centralized unit and a distributed unit or a mode in which the base station is split into a centralized unit control plane, a centralized unit user plane, and a distributed unit.

In a possible design, if the configuration information includes the deployment mode, and the deployment mode is the non-split mode, the network function management unit creates the base station.

In another possible design, if the configuration information includes the deployment mode, the deployment mode is the split mode, and the split mode includes the mode in which the base station is split into a centralized unit and a distributed unit or the mode in which the base station is split into a centralized unit control plane, a centralized unit user plane, and a distributed unit, the network function management unit creates the base station, the centralized unit, and the distributed unit; or the network function management unit creates the base station, the centralized unit control plane, the centralized unit user plane, and the distributed unit.

In this embodiment of this application, if the configuration information includes the deployment mode, and the deployment mode is the split mode, the management request sent by the network management unit further includes a component identifier. Specifically, a component corresponding to the component identifier includes at least one of the centralized unit and the distributed unit; or a component corresponding to the component identifier includes at least one of the centralized unit control plane, the centralized unit user plane, and the distributed unit. When configuring the base station based on the configuration information, the network function management unit may configure the component identifier included in the management request for the base station, and associate the base station with the component corresponding to the component identifier.

In this embodiment of this application, the management request sent by the network management unit to the network function management unit includes the component identifier, so that when configuring the base station, the network function management unit associates the component corresponding to the component identifier with the base station, and an association relationship can be set. Therefore, different components can be flexibly associated with different base stations.

Further, in a possible implementation, if the configuration information of the base station includes the deployment mode, the deployment mode is the split mode, and the split mode is the mode in which the base station is split into the centralized unit and the distributed unit or the mode in which the base station is split into the centralized unit control plane, the centralized unit user plane, and the distributed unit, the network management unit may determine to reuse the base station component, and add an identifier of the reused component to the management request sent to the network function management unit. If the split mode is the mode in which the base station is split into the centralized unit and the distributed unit, the reused component includes at least one of the centralized unit and the distributed unit. If the split mode is the mode in which the base station is split into the centralized unit control plane, the centralized unit user plane, and the distributed unit, the reused component includes at least one of the centralized unit control plane, the centralized unit user plane, and the distributed unit.

In this embodiment of this application, the management request sent by the network management unit to the network function management unit includes the identifier of the reused component, so that when configuring the base station, the network function management unit may reuse the existing component, and does not need to create a new component, thereby improving resource utilization.

Further, in another possible implementation, in this embodiment of this application, if the configuration information includes the deployment mode, the deployment mode is the split mode, and the split mode is the mode in which the base station is split into the centralized unit and the distributed unit or the mode in which the base station is split into the centralized unit control plane, the centralized unit user plane, and the distributed unit, the management request sent by the network management unit to the network function management unit may further include creation instruction information. The creation instruction information is used to instruct to create some components. If the split mode is the mode in which the base station is split into the centralized unit and the distributed unit, the some components include at least one of a part of the centralized unit and a part of the distributed unit. If the split mode is the mode in which the base station is split into the centralized unit control plane, the centralized unit user plane, and the distributed unit, the some components include at least one of a part of the centralized unit control plane, a part of centralized unit user plane, and a part of distributed unit. The network function management unit receives the creation instruction information, creates the some components based on the creation instruction information, and does not need to create all components together, so that the component is created more flexibly.

The virtualization mode in this embodiment of this application includes a component virtualization mode of the base station. A component corresponding to the component virtualization mode includes at least one of the centralized unit and the distributed unit; or a component corresponding to the component virtualization mode includes at least one of the centralized unit control plane, the centralized unit user plane, and the distributed unit.

In still another possible design, if the configuration information includes the virtualization mode, and the virtualization mode is a component virtualization mode, the management request sent by the network management unit to the network function management unit further includes a virtualized network function instance identifier, where there is an association relationship between the virtualized network function instance identifier and a component corresponding to the component virtualization mode. The component corresponding to the component virtualization mode includes at least one of the centralized unit and the distributed unit; or the component corresponding to the component virtualization mode includes at least one of the centralized unit control plane, the centralized unit user plane, and the distributed unit. When configuring the base station based on the configuration information, the network function management unit may create a base station component, configure, based on the association relationship, the virtualized network function instance identifier for the created base station component, and associate the created base station component with a virtualized network function instance corresponding to the virtualized network function instance identifier.

In this embodiment of this application, the management request sent by the network management unit to the network function management unit includes the virtualized network function instance identifier, so that when configuring the base station, the network function management unit associates the base station component with the virtualized network function instance corresponding to the virtualized network function instance identifier, and an association relationship can be set. Therefore, different base station components can be flexibly associated with different virtualized network function instances.

Specifically, the base station component created by the network function management unit includes a type of the base station component. The type of the base station component includes at least one of the centralized unit and the distributed unit; or the type of the base station component includes at least one of the centralized unit control plane, the centralized unit user plane, and the distributed unit.

In yet another possible design, the network function management unit may configure an identifier for a created base station, or may configure an identifier for a created base station component. After configuring the base station based on the configuration information, the network function management unit may send base station information to the network management unit, where the base station information includes the identifier configured for the created base station and the component identifier configured for the created base station component. A component corresponding to the component identifier includes at least one of the centralized unit and the distributed unit; or a component corresponding to the component identifier includes at least one of the centralized unit control plane, the centralized unit user plane, and the distributed unit.

According to a second aspect, a base station configuration apparatus is provided. The base station configuration apparatus may be a base station management device, or may be a chip in a base station management device, and has a function of implementing the base station configuration method performed by the network function management unit in the first aspect or any possible design of the first aspect. The function may be implemented by hardware, or may be implemented by executing corresponding software by hardware. The hardware or software includes one or more units corresponding to the foregoing function.

The base station management device includes a receiving unit and a processing unit. Optionally, the base station management device further includes a sending unit, or may include a storage unit. The receiving unit may be a receiver, and the sending unit may be a transmitter. The receiver and the transmitter may include a radio frequency circuit. For example, the processing unit may be a processor, and the storage unit may be a memory. When the base station management device includes the processing unit and the storage unit, the storage unit is configured to store a computer-executable instruction, the processing unit is connected to the storage unit, and the processing unit executes the computer-executable instruction stored in the storage unit, so that the base station management device performs the base station configuration method performed by the network function management unit in the first aspect or any possible design of the first aspect.

The chip includes a receiving unit and a processing unit. Optionally, the chip further includes a sending unit, or may include a storage unit. For example, the receiving unit and the sending unit may be input/output interfaces, pins, circuits, or the like on the chip. For example, the processing unit may be a processor, and the storage unit may be a memory. The processing unit may execute a computer-executable instruction stored in the storage unit, so that the chip performs the base station configuration method performed by the network function management unit in the first aspect or any possible design of the first aspect.

According to a third aspect, a base station configuration apparatus is provided. The base station configuration apparatus may be a base station management device, or may be a chip in a base station management device, and has a function of implementing the base station configuration method performed by the network management unit in the first aspect or any possible design of the first aspect. The function may be implemented by hardware, or may be implemented by executing corresponding software by hardware. The hardware or software includes one or more units corresponding to the foregoing function.

The base station management device includes a processing unit and a sending unit. Optionally, the base station management device further includes a receiving unit, or may include a storage unit. For example, the receiving unit may be a receiver, and the sending unit may be a transmitter. The receiver and the transmitter may include a radio frequency circuit. For example, the processing unit may be a processor, and the storage unit may be a memory. When the base station management device includes the processing unit and the storage unit, the storage unit is configured to store a computer-executable instruction, the processing unit is connected to the storage unit, and the processing unit executes the computer-executable instruction stored in the storage unit, so that the base station management device performs the base station configuration method performed by the network management unit in the first aspect or any possible design of the first aspect.

The chip includes a processing unit and a sending unit. Optionally, the chip further includes a receiving unit, or may include a storage unit. For example, the receiving unit and the sending unit may be input/output interfaces, pins, circuits, or the like on the chip. For example, the processing unit may be a processor, and the storage unit may be a memory. The processing unit may execute a computer-executable instruction stored in the storage unit, so that the chip performs the base station configuration method performed by the network management unit in the first aspect or any possible design of the first aspect.

The processor in the second aspect and the third aspect may be a central processing unit, a microprocessor, or an application-specific integrated circuit, or may be one or more integrated circuits configured to control execution of a program used by the network function management unit or the network management unit to perform the base station configuration method in the first aspect or the possible designs of the first aspect.

Optionally, the storage unit included in the chip in the second aspect and the third aspect may be a storage unit (for example, a register or a cache) in the chip. The storage unit may alternatively be a storage unit (for example, a read-only memory) that is in the network device and that is outside the chip, another type of static storage device (for example, a random access memory) that can store static information and an instruction, or the like.

According to a fourth aspect, an embodiment of this application provides a computer-readable storage medium. The computer-readable storage medium stores a computer instruction. When the instruction is run on a computer, the base station configuration method performed by the network function management unit or the network management unit in the first aspect or the possible designs of the first aspect may be implemented.

According to a fifth aspect, an embodiment of this application provides a computer program product. The computer program product includes a computer program. The computer program is used to perform the base station configuration method performed by the network function management unit or the network management unit in the first aspect or the possible designs of the first aspect.

In the base station configuration method and apparatus provided in the embodiments of this application, the management request sent by the network management unit to the network function management unit includes the configuration information of the base station, and the configuration information may include at least one of the deployment mode and the virtualization mode. The network function management unit receives the management request sent by the network management unit, and configures the base station based on the configuration information included in the management request, so that the configuration information of the base station is sent by using the management request, and the management request may be transmitted by using a same interface between the network management unit and the network function management unit. Therefore, according to the base station configuration method provided in the embodiments of this application, base stations in different deployment forms can be configured by using the same interface. In addition, according to the base station configuration method provided in the embodiments of this application, because the base station is deployed by using the same interface, during deployment of the base station, the base station can be deployed only based on the configuration information included in the management request, so that a deployment operation of the base station can be more flexible, and a plurality of different deployment forms are supported.

According to a sixth aspect, an embodiment of this application provides a base station management device. The base station management device includes a memory and a processor. The processor is configured to support the base station management device in performing a corresponding function of the network management unit in the first aspect or the possible implementations of the first aspect. The memory is coupled to the processor, and stores a program instruction and data that are necessary for the base station management device.

According to a seventh aspect, an embodiment of this application provides a base station management device. The base station management device includes a memory and a processor. The processor is configured to support the base station management device in performing a corresponding function of the network function management unit in the first aspect or the possible implementations of the first aspect. The memory is coupled to the processor, and stores a program instruction and data that are necessary for the base station management device.

According to an eighth aspect, an embodiment of this application provides a communications system. The communications system includes the network management unit and the network function management unit described in the first aspect.

According to a ninth aspect, an embodiment of this application provides a base station configuration method. In the method, a network management unit determines configuration information of a base station, and then sends a management request to a network function management unit, where the management request includes the configuration information. The network function management unit receives the management request sent by the network management unit, and configures the base station based on the configuration information, where the configuration information may include at least one of a deployment mode and a virtualization mode, and the deployment mode may include a non-split mode or a split mode. According to the base station configuration method provided in this embodiment of this application, base stations in different deployment forms can be configured by using a same interface.

### BRIEF DESCRIPTION OF DRAWINGS

FIG. 1 is an internal architectural diagram of a base station management device according to an embodiment of this application;
FIG. 2 is a flowchart of implementing a base station configuration method according to an embodiment of this application;
FIG. 3 is a schematic structural diagram of a base station configuration apparatus according to an embodiment of this application;
FIG. 4 is a schematic structural diagram of a base station management device that performs a function of an NFMF according to an embodiment of this application;
FIG. 5 is a schematic structural diagram of another base station configuration apparatus according to an embodiment of this application; and
FIG. 6 is a schematic structural diagram of a base station management device that performs a function of an NMF according to an embodiment of this application.

### DESCRIPTION OF EMBODIMENTS

The following describes technical solutions in embodiments of this application with reference to accompanying drawings.

The embodiments of this application provide a base station configuration method. The base station configuration method may be performed by a base station management device, a component or a chip in a base station management device, or another device. In the embodiments of this application, an example in which the base station management device performs the base station configuration method according to the embodiments of this application to configure a base station is used for description.

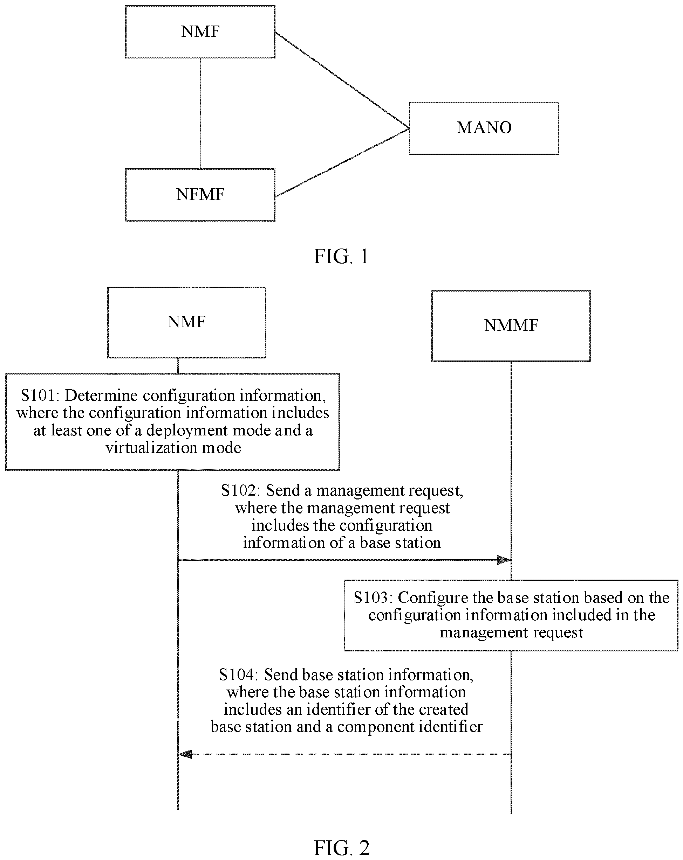

FIG. 1 is a diagram of a system architecture to which a base station configuration method is applied according to an embodiment of this application. Referring to FIG. 1, the system architecture mainly includes a network management unit (network management function, NMF), a network function management unit (Network Function Management Function, NFMF), and a management and orchestration unit (management and orchestration, MANO).

The NMF, the NFMF, and the MANO may be logical units in a same base station management device, or may be logical units in different base station management devices.

It may be understood that the logical unit in the base station management device in the embodiments of this application includes, but is not limited to the NMF, the NFMF, and the MANO. During specific implementation, the base station management device may further include another logical unit.

The NMF may perform at least one of functions such as network life cycle management (including creation, deletion, modification, and the like), network fault management, network performance management, network configuration management, and network information management. A network related to function management performed by the NMF may be understood as a set of network functions or a set of network elements, or may be a network slice or a network slice subnet. The NMF may be an independent entity, or may be a function of another entity (for example, a slice management unit, a domain management unit, or a subnet management unit).

The NFMF may perform at least one of functions such as network function life cycle management (including creation, deletion, modification, and the like), network function configuration management, network function fault management, network function performance management, and network function information management. A network function related to function management performed by the NFMF may be a network element. The NFMF may be an independent entity, or may be a function of another entity (for example, a network device, a network function, a domain management unit, or a subnet management unit).

In the embodiments of this application, the NFMF opens an NF management service or an interface for the NMF to invoke. The management service may perform service management by using the following network functions (Network Function, NF) as a granularity: an NF life cycle management service, an NF configuration management service, an NF performance management service, an NF fault management service, and an NF provisioning management service. The management service may perform the service management by using the following services as a finer granularity: a fault subscription management service, a performance monitoring management service, an NF creation management service, an NF deletion management service, an NF modification management service, and the like.

The MANO is mainly responsible for virtual resource management, for example, one or more of virtualized network function (virtualized network function, VNF)/network slice (network slice, NS) life cycle management, VNF/NS fault management, VNF/NS performance management, VNF/NS configuration management, virtual resource allocation management, virtual resource reservation management, and the like.

The MANO includes one or more components such as a network function virtualization orchestrator (network function virtualization orchestration, NFVO), a virtualized network function manager (virtualized network function manager, VNFM), and a virtualized infrastructure manager (virtualized infrastructure manager, VIM). The NFVO may be configured to: manage an NS life cycle, and coordinate NS life cycle management, VNF life cycle management (which needs support from the VNFM), and management of various resources of a network function virtualization infrastructure (network function virtualization infrastructure, NFVI) unit (which needs support from the VIM), thereby ensuring optimized configuration of required resources and connections. The life cycle management is management for instantiation, maintenance, and termination of a VNF unit, an NS unit, or the like. The VNFM is responsible for the VNF life cycle management. The VIM is responsible for controlling and managing computing resources, storage resources, and network resources of an NFVI unit. The VIM may be deployed in an infrastructure domain (for example, an NFVI access point/a service providing point) of an infrastructure network operator.

With development of communications technologies, a communications system has evolved into a fifth-generation (5G) new radio (New Radio, NR) communications system. In the 5G NR system, there are a large quantity of base stations, and a plurality of different deployment modes may be included. For example, the deployment mode may include a non-split mode, or may include a split mode. The split mode includes a plurality of different split modes, for example, may include a mode in which the base station is split into a centralized unit and a distributed unit or a mode in which the base station is split into a centralized unit control plane, a centralized unit user plane, and a distributed unit. Further, the base station may be virtualized, or may not be virtualized. When the base station is virtualized, the virtualization mode may include a plurality of forms. For example, the base station may be partially virtualized, or a base station component may be virtualized. The virtualized base station component may be at least one of the centralized unit and the distributed unit, or may be at least one of the centralized unit control plane, the centralized unit user plane, and the distributed unit.

Currently, for different deployment modes and different virtualization modes of the base station, different interfaces and models need to be configured between the NMF and the NFMF, to complete configuration of the base station. This brings a relatively large workload to a configuration process of the base station. Consequently, the configuration process of the base station is complex.

In view of this, the embodiments of this application provide a base station configuration method. In the method, a management request sent by an NMF to an NFMF includes configuration information of a base station, and the configuration information may include at least one of a deployment mode and a virtualization mode. The NFMF receives the management request sent by the NMF, and configures the base station based on the configuration information included in the management request, so that the configuration information of the base station is sent by using the management request, and the management request may be transmitted by using a same interface between the NMF and the NFMF. Therefore, according to the base station configuration method provided in the embodiments of this application, base stations in different deployment forms can be configured by using the same interface.

FIG. 2 is a flowchart of implementing a base station configuration method according to an embodiment of this application. Referring to FIG. 2, the method includes the following steps.

S101: An NMF determines configuration information of a base station.

In this embodiment of this application, the configuration information of the base station may include a deployment mode. The deployment mode may be a split mode, or may be a non-split mode. The split mode may include a mode in which the base station is split into a CU and a DU, or may include a mode in which the base station is split into a CUCP, a CUUP, and a DU.

In this embodiment of this application, the configuration information of the base station may alternatively include a non-virtualization mode or a virtualization mode of the base station. The virtualization mode may include a component virtualization mode of the base station. A base station component may be at least one of a CU and a DU, or may be at least one of a CUCP, a CUUP, and a DU.

In this embodiment of this application, the configuration information of the base station may include at least one of the deployment mode and the virtualization mode.

S102: The NMF sends a management request to an NFMF, where the management request includes the configuration information of the base station.

The management request designed in this embodiment of this application may be a base station creation request, a base station configuration request, a base station instantiation request, or the like.

S103: The NFMF receives the management request sent by the NMF, and configures the base station based on the configuration information included in the management request.

In this embodiment of this application, if the configuration information of the base station includes the deployment mode of the base station, and the deployment mode is the non-split mode, the NFMF creates the base station.

In this embodiment of this application, creating the base station may be understood as creating a management object of the base station, creating a management object instance of the base station, creating management information of the base station, or the like.

In this embodiment of this application, if the configuration information of the base station includes the deployment mode, the deployment mode is the split mode, and the split mode is the mode in which the base station is split into the CU and the DU, the NFMF creates the base station, and creates the CU and the DU.

In this embodiment of this application, creating the CU may be understood as creating a management object of the CU, creating a management object instance of the CU, creating management information of the CU, or the like. Creating the DU may be understood as creating a management object of the DU, creating a management object instance of the DU, creating management information of the DU, or the like.

In this embodiment of this application, if the configuration information of the base station includes the deployment mode, the deployment mode is the split mode, and the split mode is the mode in which the base station is split into the CUCP, the CUUP, and the DU, the NFMF creates the base station, and creates the CUCP, the CUUP, and the DU.

In this embodiment of this application, creating the CUCP may be understood as creating a management object of the CUCP, creating a management object instance of the CUCP, creating management information of the CUCP, or the like. Creating the CUUP may be understood as creating a management object of the CUUP, creating a management object instance of the CUUP, creating management information of the CUUP, or the like. Creating the DU may be understood as creating a management object of the DU, creating a management object instance of the DU, creating management information of the DU, or the like.

Further, in this embodiment of this application, if the configuration information of the base station includes the virtualization mode, and the virtualization mode is the component virtualization mode of the base station, the NFMF may create the base station component, configure, for the created base station component, a virtualized network function instance identifier (VNF instance ID) obtained from a VNFM, and associate the created base station component with a VNF instance corresponding to the VNF instance ID.

In this embodiment of this application, the management request sent by the NMF to the NFMF includes the component identifier, so that when configuring the base station, the NFMF associates a component corresponding to the component identifier with the base station, and an association relationship can be set. Therefore, different components can be flexibly associated with different base stations.

In this embodiment of this application, when creating the base station component, the NFMF may create a base station component including a type of the base station component (GNB component). The type of the base station component includes at least one of the CU and the DU, or may include at least one of the CUCP, the CUUP, and the DU. The created base station component may be indicated by using the type of the base station component. For example, creating a new CU may be creating a GNB component, and the CU is indicated by using a type attribute of the GNB component. An implementation process of creating a new DU, a new CUCP, or a new CUUP is similar to the implementation process of creating the new CU. Details are not described in this embodiment of this application.

In a possible implementation, the NFMF may initiate a virtualized network function instance (VNF instance) creation request to a VNFM. The VNFM creates a VNF instance and returns a VNF instance ID to the NFMF. The VNFM configures, for a created base station component, the VNF instance ID obtained from the VNFM, and associates the created base station component with the VNF instance corresponding to the VNF instance ID.

In another possible implementation, in this embodiment of this application, if the virtualization mode of the base station is the component virtualization mode of the base station, a VNF instance ID may be included in the management request sent by the NMF to the NFMF. There is an association relationship between the VNF instance ID and a base station component corresponding to the component virtualization mode of the base station. A component corresponding to the component virtualization mode may include at least one of the CU and the DU, or a component corresponding to the component virtualization mode includes at least one of the CUCP, the CUUP, and the DU. When configuring the base station, the NFMF may create the base station component, configure, for the created base station component based on the association relationship between the VNF instance ID and the base station component corresponding to the component virtualization mode of the base station, the VNF instance ID included in the management request, and associate the created base station component with a VNF instance corresponding to the configured VNF instance ID.

In this embodiment of this application, the management request sent by the NMF to the NFMF includes the VNF instance ID, so that when configuring the base station, the NFMF associates the VNF instance corresponding to the VNF instance ID with the base station component, and the association relationship can be set. Therefore, different base station components can be flexibly associated with different VNF instances.

In this embodiment of this application, after the NFMF configures the base station based on the configuration information included in the management request, the method may further include the following step.

S104: The NFMF sends base station information to the NMF, where the base station information includes an identifier of the created base station and the component identifier.

In this embodiment of this application, the component corresponding to the component identifier includes at least one of the centralized unit and the distributed unit; or the component corresponding to the component identifier includes at least one of the centralized unit control plane, the centralized unit user plane, and the distributed unit.

In this embodiment of this application, after creating the base station, the NFMF may further configure an identifier of the created base station, and return the identifier of the created base station to the NMF. After creating the base station component, the NFMF may further configure an identifier of the created base station component, and return the identifier of the created base station component to the NMF. For example, the NFMF may further configure the identifier of the created base station, an identifier of a created CU, and an identifier of a created DU, and return the identifier of the created base station, the identifier of the created CU, and the identifier of the created DU to the NMF. Alternatively, the NFMF may further configure the identifier of the created base station, an identifier of a created CUCP, an identifier of a created CUUP, and an identifier of a created DU, and return the identifier of the created base station, the identifier of the created CUCP, the identifier of the created CUUP, and the identifier of the created DU to the NMF

In this embodiment of this application, if the base station component created by the NFMF includes the GNB component, an identifier of the GNB component may be returned.

It may be understood that, in this embodiment of this application, the identifiers of the CU, the DU, the CUCP, the CUUP, and the GNB Component may be the identifiers of the CU, the DU, the CUCP, the CUUP, and the GNB Component, identifiers of management objects of the CU, the DU, the CUCP, the CUUP, and the GNB Component, identifiers of information about the CU, the DU, the CUCP, the CUUP, and the GNB Component, or identifiers of management information of the CU, the DU, the CUCP, the CUUP, and the GNB Component.

It may be understood that S104 in this embodiment of this application is an optional step.

Further, in this embodiment of this application, after configuring the base station based on the configuration information included in the management request, the NFMF may further configure a service parameter for the created base station and the base station component, for example, configure a cell-level service parameter.

According to the base station configuration method provided in the embodiments of this application, the management request sent by the NMF to the NFMF includes the configuration information of the base station, and the configuration information may include at least one of the deployment mode and the virtualization mode. The NFMF receives the management request sent by the NMF, and configures the base station based on the configuration information included in the management request, so that the configuration information of the base station is sent by using the management request, and the management request may be transmitted by using a same interface between the NMF and the NFMF. Therefore, according to the base station configuration method provided in the embodiments of this application, base stations in different deployment forms can be configured by using the same interface. In addition, according to the base station configuration method provided in the embodiments of this application, because the base station is deployed by using the same interface, during deployment of the base station, the base station can be deployed only based on the configuration information included in the management request, so that a deployment operation of the base station can be more flexible, and a plurality of different deployment forms are supported.

The base station configuration method in the foregoing embodiments is described by combining actual application in the following embodiments of this application.

In this embodiment of this application, when determining the configuration information of the base station, the NMF may determine the deployment mode of the base station. However, a specific implementation in which the NMF determines the deployment mode of the base station is not limited. For example, the NMF may determine the deployment mode of the base station based on a split mode requirement carried in a received base station deployment requirement of an operator. Alternatively, the NMF may determine, based on a pre-configured policy, a to-be-used split mode. For example, if there is a high requirement for a latency, the NMF may use the non-split mode of the base station. If there is a high requirement for reliability, the NMF uses the split mode in which the base station is split into the CUCP, the CUUP, and the DU.

In this embodiment of this application, after determining the deployment mode of the base station, the NMF may add the deployment mode to the management request in different manners, and send the management request to the NFMF. For example, different deployment modes of the base station may be identified by using different bit values. For example, the deployment modes are identified by using different values of "Function Split Mode". Function Split Mode=0 indicates that the GNB is not split. Function Split Mode=1 indicates that the GNB is split into the CU and the DU. Function Split Mode=2 indicates that the GNB is split into the CUCP, the CUUP, and the DU. For another example, a default value or a null value of Function Split mode indicates that the GNB is not split. Function Split Mode=0 indicates that the GNB is split into the CU and the DU. Function Split Mode=1 indicates that the GNB is split into the CUCP, the CUUP, and the DU.

In this embodiment of this application, different deployment modes of the base station may alternatively be identified by using different attributes. For example, different deployment modes are identified by using "Function Split Mode" having different attributes. For example, Function Split Mode includes Function Split Mode 1 and Function Split Mode 2. Function Split Mode 1 indicates that the base station is split into the CU and the DU. Function Split Mode 2 indicates that the base station is split into the CUCP, the CUUP, and the DU. In this way, if neither Function Split Mode 1 nor Function Split Mode 2 has a value, it indicates the non-split mode of the base station; if both Function Split Mode 1 and Function Split Mode 2 have values, it indicates that the base station is split into the CUCP, the CUUP, and the DU; or if Function Split Mode 1 has a value and Function Split Mode 2 has no value, it indicates that the base station is split into the CU and the DU.

In this embodiment of this application, when determining the configuration information of the base station, the NMF may determine the virtualization mode of the base station. However, a specific implementation in which the NMF determines the deployment mode of the base station is not limited. For example, the NMF may receive the virtualization mode carried in the base station deployment requirement of the operator. Alternatively, the NMF may determine the virtualization mode of the base station based on a received base station deployment request or the pre-configured policy.

In this embodiment of this application, if the configuration information of the base station includes the deployment mode of the base station, the deployment mode is the split mode, and the split mode is the mode in which the base station is split into the CU and the DU or the mode in which the base station is split into the CUCP, the CUUP, and the DU, the NMF may determine to reuse the base station component, and add an identifier of the reused component to the management request sent to the NFMF. When configuring the base station, the NFMF may reuse the existing component, and does not need to create a new component, thereby improving resource utilization. If the split mode is the mode in which the base station is split into the CU and the DU, the reused component includes at least one of the CU and the DU. If the split mode is the mode in which the base station is split into the CUCP, the CUUP, and the DU, the reused component includes at least one of the CUCP, the CUUP, and the DU.

Further, in this embodiment of this application, if the configuration information of the base station includes the split mode of the base station, the split mode includes the mode in which the base station is split into the CU and the DU or the mode in which the base station is split into the CUCP, the CUUP, and the DU, the management request sent by the NMF to the NFMF may further include creation instruction information. The creation instruction information is used to instruct to create some components. If the split mode is the mode in which the base station is split into the CU and the DU, the some components include at least one of a part of the CU and a part of the DU. If the split mode is the mode in which the base station is split into the CUCP, the CUUP, and the DU, the some components include at least one of a part of the CUCP, a part of CUUP, and a part of DU. The NFMF receives the creation instruction information, creates the some components based on the creation instruction information, and does not need to create all components together, so that the component is created more flexibly.

The solutions provided in the embodiments of this application are described above mainly from a perspective of interaction between the NMF and the NFMF. It may be understood that, to implement the foregoing functions, the NMF and the NFMF include corresponding hardware structures and/or software units for performing the functions. With reference to the examples described in the embodiments disclosed in this application, the units (devices or components) and algorithm steps can be implemented in a form of hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation falls beyond the scope of the technical solutions in the embodiments of this application.

In the embodiments of this application, functional unit (device or component) division may be performed on the NMF and the NFMF according to the foregoing method examples. For example, the functional units (devices or components) may be divided according to the corresponding functions, or two or more functions may be integrated into one processing unit (device or component). The integrated unit (device or component) may be implemented in the form of hardware, or may be implemented in the form of a software functional unit (device or component). It should be noted that, in the embodiments of this application, unit (device or component) division is an example, and is merely a logical function division. During actual implementation, another division manner may be used.

Based on a same concept as the foregoing method embodiments, an embodiment of this application provides a base station configuration apparatus.

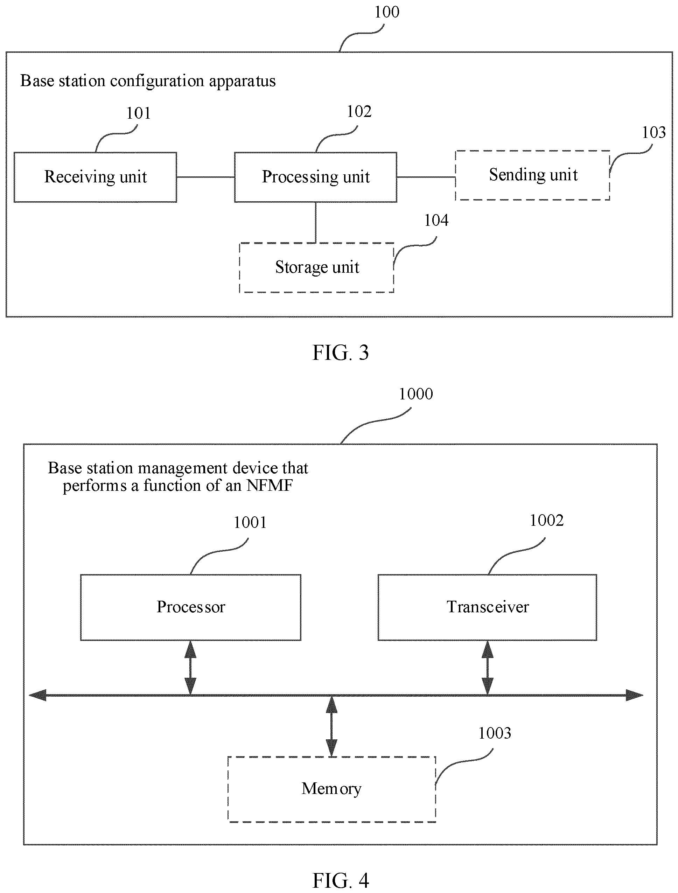

When an integrated unit (device or component) is used, FIG. 3 is a schematic structural diagram of a base station configuration apparatus 100 according to an embodiment of this application. The base station configuration apparatus 100 may be a base station management device, or may be a chip in the base station management device, and has a function of performing the method performed by the NFMF in the foregoing method embodiments. Referring to FIG. 3, the base station configuration apparatus 100 includes a receiving unit 101 and a processing unit 102. The receiving unit 101 is configured to receive a management request sent by an NMF, where the management request includes configuration information of a base station, the configuration information includes at least one of a deployment mode and a virtualization mode, and the deployment mode includes a non-split mode or a split mode. The processing unit 102 is configured to configure the base station based on the configuration information received by the receiving unit 101.

In a possible example, the processing unit 102 configures, based on the configuration information, the base station in the following manner:
creating the base station if the configuration information includes the deployment mode and the deployment mode is the non-split mode.

In another possible example, the processing unit 102 configures, based on the configuration information, the base station in the following manner:
if the configuration information includes the deployment mode, the deployment mode is the split mode, and the split mode includes a mode in which the base station is split into a CU and a DU or a mode in which the base station is split into a CUCP, a CUUP, and a DU, creating the base station, the CU, and the DU;
or creating, by an NFMF, the base station, the CUCP, the CUUP, and the DU.

In still another possible example, if the configuration information received by the receiving unit 101 includes the deployment mode, the deployment mode is the split mode, and the management request further includes a component identifier, when configuring the base station based on the configuration information, the processing unit 102 may configure the component identifier for the base station, and associate the base station with a component corresponding to the component identifier. The component corresponding to the component identifier includes at least one of the CU and the DU; or the component corresponding to the component identifier includes at least one of the CUCP, the CUUP, and the DU.

In yet another possible example, if the configuration information received by the receiving unit 101 includes the virtualization mode, the virtualization mode is a component virtualization mode, the management request further includes a virtualized network function instance identifier, and there is an association relationship between the virtualized network function instance identifier and a component corresponding to the component virtualization mode, when configuring the base station based on the configuration information, the processing unit 102 may create a base station component, configure, based on the association relationship, the virtualized network function instance identifier for the created base station component, and associate the created base station component with a virtualized network function instance corresponding to the virtualized network function instance identifier. The component corresponding to the component virtualization mode includes at least one of the CU and the DU; or the component corresponding to the component virtualization mode includes at least one of the CUCP, the CUUP, and the DU.

Specifically, the base station component created by the processing unit 102 includes a type of the base station component. The type of the base station component includes at least one of the CU and the DU; or the type of the base station component includes at least one of the CUCP, the CUUP, and the DU.

In still yet another possible example, the base station configuration apparatus 100 further includes a sending unit 103. The sending unit 103 is configured to send, after the processing unit 102 configures the base station based on the configuration information, base station information to the NMF, where the base station information includes an identifier of the created base station and the component identifier. The component corresponding to the component identifier includes at least one of the CU and the DU; or the component corresponding to the component identifier includes at least one of the CUCP, the CUUP, and the DU.

Further, the base station configuration apparatus 100 described above may further include a storage unit 104. The storage unit 104 is configured to store a computer-executable instruction. The processing unit 102 is connected to the storage unit 104. The processing unit 102 executes the computer-executable instruction stored in the storage unit 104, so that the base station configuration apparatus 100 performs the base station configuration method performed by the NFMF in the foregoing method embodiments.

During implementation in a hardware form, in this embodiment of this application, the receiving unit 101 and the sending unit 103 may be communications interfaces, transceivers, transceiver circuits, or the like. The communications interface is a general name and may include one or more interfaces. The transceiver circuit may be a radio frequency circuit. The processing unit 102 may be a processor or a controller. The storage unit 104 may be a memory.

When the receiving unit 101 and the sending unit 103 are transceivers, the processing unit 102 is the processor, and the storage unit 104 is the memory, the base station configuration apparatus 100 in this embodiment of this application may be the base station configuration apparatus shown in FIG. 4. The base station configuration apparatus shown in FIG. 4 may be applied to the base station management device, to perform the method performed by the NFMF in the foregoing method embodiments.

FIG. 4 is a schematic structural diagram of a base station management device 1000 that performs a function of an NFMF according to an embodiment of this application. In other words, FIG. 4 is another possible schematic structural diagram of the base station configuration apparatus 100. Referring to FIG. 4, the base station management device 10000 includes a processor 1001 and a transceiver 1002. The processor 1001 may alternatively be a controller. The processor 1001 is configured to support the base station management device in performing the function of the NFMF in FIG. 2. The transceiver 1002 is configured to support a function of sending and receiving a message by the base station management device. The base station management device may further include a memory 1003. The memory 1003 is configured to: couple to the processor 1001, and store a program instruction and data that are necessary for the base station management device. The processor 1001, the transceiver 1002, and the memory 1003 are connected to each other. The memory 1003 is configured to store an instruction. The processor 1001 is configured to execute the instruction stored in the memory 1003, to control the transceiver 1002 to send and receive a message, thereby implementing the steps in which the NFMF performs corresponding functions in the foregoing methods.

Further, the base station management device 1000 may further include a bus system. The processor 1001, the transceiver 1002, and the memory 1003 may be connected to each other by using the bus system.

In this embodiment of this application, for concepts, explanations, detailed descriptions, and other steps that are of the base station configuration apparatus 100 and the base station management device 1000 and that are related to the technical solutions provided in the embodiments of this application, refer to descriptions of the content in the foregoing method embodiments or other embodiments. Details are not described herein again.

During implementation in a chip form, the base station configuration apparatus 100 in the embodiments of this application may be applied to a chip in the base station management device. The chip has a function of implementing the base station configuration method performed by the NFMF in the foregoing method embodiments. The function may be implemented by hardware, or may be implemented by executing corresponding software by hardware. The hardware or software includes one or more units corresponding to the foregoing function. The chip includes a receiving unit 101 and a processing unit 102. The chip may further include a sending unit 103, or may further include a storage unit 104. The receiving unit 101 and the sending unit 103 may be input/output interfaces, pins, circuits, or the like on the chip. The processing unit 102 may execute a computer-executable instruction stored in the storage unit 104, so that the chip performs the base station configuration method performed by the NFMF in the foregoing method embodiments. Optionally, the storage unit 104 may be a storage unit (for example, a register or a cache) in the chip. The storage unit 104 may alternatively be a storage unit (for example, a read-only memory (read-only memory, ROM)) that is in the base station management device and that is outside the chip, another type of static storage device (for example, a random access memory (random access memory, RAM)) that can store static information and an instruction, or the like.

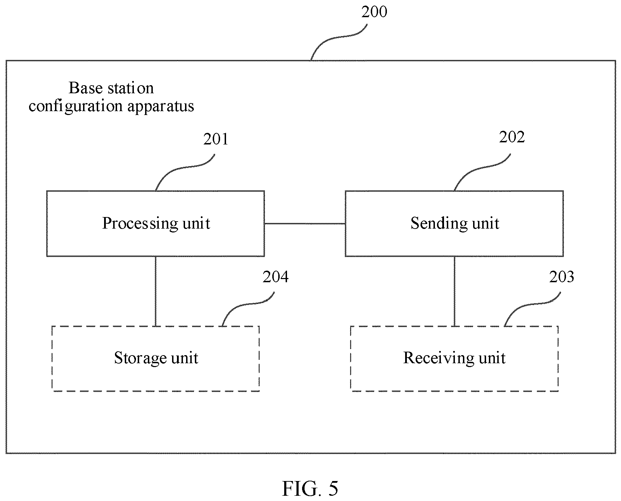

When an integrated unit (device or component) is used, FIG. 5 is a schematic structural diagram of another base station configuration apparatus 200 according to an embodiment of this application. The base station configuration apparatus 200 may be a base station management device, or may be a chip in the base station management device, and has a function of performing the method performed by the NMF in the foregoing method embodiments. Referring to FIG. 5, the base station configuration apparatus 200 includes a processing unit 201 and a sending unit 202. The processing unit 201 is configured to determine configuration information of a base station, where the configuration information includes at least one of a deployment mode and a virtualization mode, and the deployment mode includes a non-split mode or a split mode. The sending unit 202 is configured to send a management request to an NFMF, where the management request includes the configuration information determined by the processing unit.

In a possible implementation, if the configuration information determined by the processing unit 201 includes the deployment mode, and the deployment mode is the split mode, the split mode includes a mode in which the base station is split into a CU and a DU or a mode in which the base station is split into a CUCP, a CUUP, and a DU.

In a possible example, if the configuration information determined by the processing unit 201 includes the deployment mode, and the deployment mode is the split mode, the management request sent by the sending unit 202 further includes a component identifier. The component corresponding to the component identifier includes at least one of the CU and the DU; or the component corresponding to the component identifier includes at least one of the CUCP, the CUUP, and the DU.

In another possible implementation, if the configuration information determined by the processing unit 201 includes the virtualization mode, and the virtualization mode is a component virtualization mode, the management request sent by the sending unit 202 further includes a virtualized network function instance identifier, where there is an association relationship between the virtualized network function instance identifier and a component corresponding to the component virtualization mode. The component corresponding to the component virtualization mode includes at least one of the CU and the DU; or the component corresponding to the component virtualization mode includes at least one of the CUCP, the CUUP, and the DU.

Further, the base station configuration apparatus 200 further includes a receiving unit 203. The receiving unit 203 is configured to receive, after the sending unit 202 sends the management request to the NFMF, base station information sent by the NFMF, where the base station information includes an identifier of a created base station and the component identifier. The component corresponding to the component identifier includes at least one of the CU and the DU; or the component corresponding to the component identifier includes at least one of the CUCP, the CUUP, and the DU.

Further, the base station configuration apparatus 200 described above may further include a storage unit 204. The storage unit 204 is configured to store a computer-executable instruction. The processing unit 201 is connected to the storage unit 204. The processing unit 201 executes the computer-executable instruction stored in the storage unit 204, so that the base station configuration apparatus 200 performs the base station configuration method performed by the NMF in the foregoing method embodiments.

During implementation in a hardware form, in this embodiment of this application, the sending unit 202 and the receiving unit 203 may be communications interfaces, transceivers, transceiver circuits, or the like. The communications interface is a general name and may include one or more interfaces. The transceiver circuit may be a radio frequency circuit. The processing unit 201 may be a processor or a controller. The storage unit 204 may be a memory.

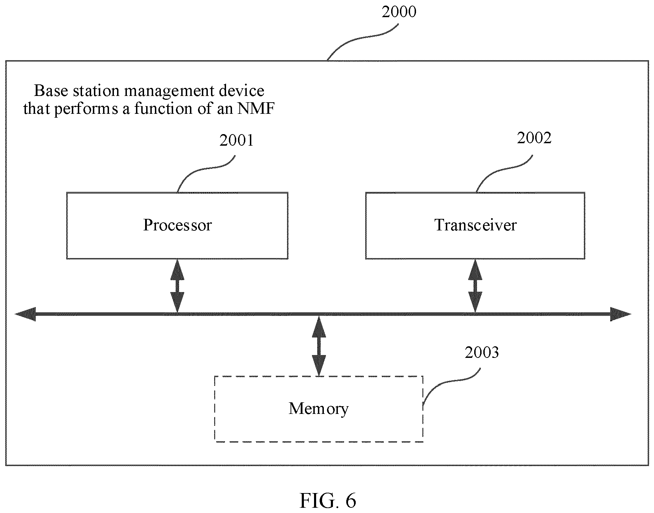

When the sending unit 202 and the receiving unit 203 are transceivers, the processing unit 201 is the processor, and the storage unit 204 is the memory, the base station configuration apparatus 200 in this embodiment of this application may be the base station configuration apparatus shown in FIG. 6. The base station configuration apparatus shown in FIG. 6 may be applied to the base station management device, to perform the method performed by the NMF in the foregoing method embodiments.

FIG. 6 is a schematic structural diagram of a base station management device 2000 that performs a function of an NMF according to an embodiment of this application. In other words, FIG. 6 is another possible schematic structural diagram of the base station configuration apparatus 200. Referring to FIG. 6, the base station management device 2000 includes a processor 2001 and a transceiver 2002. The processor 2001 may alternatively be a controller. The processor 2001 is configured to support the base station management device in performing the function of the NMF in FIG. 2. The transceiver 2002 is configured to support a function of sending and receiving a message by the base station management device. The base station management device may further include a memory 2003. The memory 2003 is configured to: couple to the processor 2001, and store a program instruction and data that are necessary for the base station management device. The processor 2001, the transceiver 2002, and the memory 2003 are connected to each other. The memory 2003 is configured to store an instruction. The processor 2001 is configured to execute the instruction stored in the memory 2003, to control the transceiver 2002 to send and receive a message, thereby implementing the steps in which the NMF performs corresponding functions in the foregoing methods.

Further, the base station management device 2000 may further include a bus system. The processor 2001, the transceiver 2002, and the memory 2003 may be connected to each other by using the bus system.

In this embodiment of this application, for concepts, explanations, detailed descriptions, and other steps that are of the base station configuration apparatus 200 and the base station management device 2000 and that are related to the technical solutions provided in the embodiments of this application, refer to descriptions of the content in the foregoing method emdodiments or other embodiments. Details are not described herein again.

During implementation in a chip form, the base station configuration apparatus 200 in the embodiments of this application may be applied to a chip in the base station management device. The chip has a function of implementing the base station configuration method performed by the NMF in the foregoing method embodiments. The function may be implemented by hardware, or may be implemented by executing corresponding software by hardware. The hardware or software includes one or more units corresponding to the foregoing function. The chip includes a processing unit 201 and a sending unit 202. The chip may further include a receiving unit 203, or may include a storage unit 204. The sending unit 202 and the receiving unit 203 may be input/output interfaces, pins, circuits, or the like on the chip. The processing unit 201 may execute a computer-executable instruction stored in the storage unit 204, so that the chip performs the base station configuration method performed by the NMF in the foregoing method embodiments. Optionally, the storage unit 204 may be a storage unit (for example, a register or a cache) in the chip. The storage unit 204 may alternatively be a storage unit (for example, a read-only memory (read-only memory, ROM)) that is in the base station management device and that is outside the chip, another type of static storage device (for example, a random access memory (random access memory, RAM)) that can store static information and an instruction, or the like.

It may be understood that FIG. 4 and FIG. 6 show merely simplified designs of the base station management device 1000 and the base station management device 2000. During actual application, the base station management device 1000 and the base station management device 2000 are not limited to the foregoing structures. During actual application, the base station management device 1000 and the base station management device 2000 may separately include any quantity of interfaces, processors, memories, and the like. All base station management devices that may implement the embodiments of this application fall within the protection scope of the embodiments of this application.

It may further be understood that the base station configuration apparatus 100, the base station management device 1000, the base station configuration apparatus 200, and the base station management device 2000 in the embodiments of this application may be configured to implement corresponding functions of the NFMF and the NMF in the foregoing method embodiments of the embodiments of this application. Therefore, for content that is not thoroughly described in the embodiments of this application, refer to the descriptions of the related method embodiments. Details are not described again in the embodiments of this application.

It should be further understood that the processor in the embodiments of this application may be a central processing unit (central processing unit, CPU), or may be another general purpose processor, a digital signal processor (DSP), an application-specific integrated circuit (ASIC), a field programmable gate array (FPGA), or another programmable logic device, discrete gate or transistor logic device, discrete hardware component, or the like. The general purpose processor may be a microprocessor, or the processor may be any conventional processor or the like.

The memory may include a read-only memory and a random access memory, and provide an instruction and data to the processor. Apart of the memory may further include a non-volatile random access memory. For example, the memory may further store information about a device type.

The bus system may further include a power bus, a control bus, a status signal bus, and the like, in addition to a data bus. However, for clear description, various types of buses in the figure are marked as the bus system.

In an implementation process, steps in the foregoing method embodiments may be implemented by using a hardware integrated logical circuit in the processor, or by using instructions in a form of software. The steps of the network performance assurance method disclosed with reference to the embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and implements the steps in the foregoing method embodiments in combination with hardware of the processor. To avoid repetition, details are not described herein again.

It should be understood that "coupling" in the embodiments of this application means that two components are directly or indirectly combined with each other. Such combination may be fixed or movable, and may allow flow of liquid, electricity, an electrical signal, or another type of signal to communicate between the two components.

An embodiment of this application provides a communications system. The communications system includes the foregoing base station configuration apparatus configured to perform the function of the NFMF and the foregoing base station configuration apparatus configured to perform the function of the NMF.

An embodiment of this application provides a computer-readable storage medium. The computer-readable storage medium stores a computer instruction. When the instruction is run on a computer, any base station configuration method performed by the NMF or the NFMF in the foregoing embodiments may be implemented.

An embodiment of this application provides a computer program product. The computer program product includes a computer program. The computer program is used to implement any base station configuration method performed by the NMF or the NFMF in the foregoing embodiments.

A person skilled in the art should understand that the embodiments of this application may be provided as a method, a system, or a computer program product. Therefore, the embodiments of this application may use a form of hardware only embodiments, software only embodiments, or embodiments with a combination of software and hardware. In addition, the embodiments of this application may use a form of a computer program product that is implemented on one or more computer-usable storage media (including but not limited to a disk memory, a CD-ROM, an optical memory, and the like) that include computer-usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the embodiments of this application without departing from the spirit and scope of this application. This application is intended to cover these modifications and variations provided that they fall within the scope of protection defined by the following claims and their equivalent technologies.

## Claims

1. Abase station configuration method, comprising:
receiving, by a network function management unit, a management request sent by a network management unit, wherein the management request comprises configuration information of a base station, the configuration information comprises at least one of a deployment mode and a virtualization mode, and the deployment mode comprises a non-split mode or a split mode; and
configuring, by the network function management unit, the base station based on the configuration information.

2. The method according to claim 1, wherein the configuring, by the network function management unit, the base station based on the configuration information comprises:
if the configuration information comprises the deployment mode, the deployment mode is the split mode, and the split mode comprises a mode in which the base station is split into a centralized unit and a distributed unit or a mode in which the base station is split into a centralized unit control plane, a centralized unit user plane, and a distributed unit,
creating, by the network function management unit, the base station, the centralized unit, and the distributed unit; or creating, by the network function management unit, the base station, the centralized unit control plane, the centralized unit user plane, and the distributed unit.

3. The method according to claim 2, wherein the management request further comprises a component identifier, and a component corresponding to the component identifier comprises at least one of the centralized unit and the distributed unit; or a component corresponding to the component identifier comprises at least one of the centralized unit control plane, the centralized unit user plane, and the distributed unit; and
the configuring, by the network function management unit, the base station based on the configuration information comprises:
configuring, by the network function management unit, the component identifier for the base station, and associating the base station with the component corresponding to the component identifier.

4. The method according to claim 1, wherein the configuring, by the network function management unit, the base station based on the configuration information comprises:
creating, by the network function management unit, the base station if the configuration information comprises the deployment mode and the deployment mode is the non-split mode.

5. The method according to any one of claims 1 to 3, wherein when the configuration information comprises the virtualization mode and the virtualization mode is a component virtualization mode,
the management request further comprises a virtualized network function instance identifier, and there is an association relationship between the virtualized network function instance identifier and a component corresponding to the component virtualization mode;
the component corresponding to the component virtualization mode comprises at least one of the centralized unit and the distributed unit; or the component corresponding to the component virtualization mode comprises at least one of the centralized unit control plane, the centralized unit user plane, and the distributed unit; and
the configuring, by the network function management unit, the base station based on the configuration information comprises:
creating, by the network management unit, a base station component, configuring, based on the association relationship, the virtualized network function instance identifier for the created base station component, and associating the created base station component with a virtualized network function instance corresponding to the virtualized network function instance identifier.

6. The method according to claim 5, wherein the base station component created by the network function management unit comprises a type of the base station component; and
the type of the base station component comprises at least one of the centralized unit and the distributed unit; or the type of the base station component comprises at least one of the centralized unit control plane, the centralized unit user plane, and the distributed unit.

7. The method according to any one of claims 1 to 6, wherein after the configuring, by the network function management unit, the base station based on the configuration information, the method further comprises:
sending, by the network function management unit, base station information to the network management unit, wherein the base station information comprises an identifier of the created base station and the component identifier; and
the component corresponding to the component identifier comprises at least one of the centralized unit and the distributed unit; or
the component corresponding to the component identifier comprises at least one of the centralized unit control plane, the centralized unit user plane, and the distributed unit.

8. Abase station configuration method, comprising:
determining, by a network management unit, configuration information of a base station, wherein the configuration information comprises at least one of a deployment mode and a virtualization mode, and the deployment mode comprises a non-split mode or a split mode; and
sending, by the network management unit, a management request to a network function management unit, wherein the management request comprises the configuration information.

9. The method according to claim 8, wherein when the configuration information comprises the deployment mode and the deployment mode is the split mode, the split mode comprises a mode in which the base station is split into a centralized unit and a distributed unit or a mode in which the base station is split into a centralized unit control plane, a centralized unit user plane, and a distributed unit.

10. The method according to claim 9, wherein the management request further comprises a component identifier; and
a component corresponding to the component identifier comprises at least one of the centralized unit and the distributed unit; or
a component corresponding to the component identifier comprises at least one of the centralized unit control plane, the centralized unit user plane, and the distributed unit.

11. The method according to any one of claims 8 to 10, wherein when the configuration information comprises the virtualization mode and the virtualization mode is a component virtualization mode,
the management request further comprises a virtualized network function instance identifier, and there is an association relationship between the virtualized network function instance identifier and a component corresponding to the component virtualization mode; and
the component corresponding to the component virtualization mode comprises at least one of the centralized unit and the distributed unit; or the component corresponding to the component virtualization mode comprises at least one of the centralized unit control plane, the centralized unit user plane, and the distributed unit.

12. The method according to any one of claims 8 to 11, wherein after the sending, by the network management unit, a management request to a network function management unit, the method further comprises:
receiving, by the network management unit, base station information sent by the network function management unit, wherein the base station information comprises an identifier of a created base station and the component identifier; and
the component corresponding to the component identifier comprises at least one of the centralized unit and the distributed unit; or
the component corresponding to the component identifier comprises at least one of the centralized unit control plane, the centralized unit user plane, and the distributed unit.

13. Abase station configuration apparatus, comprising:
a receiving unit, configured to receive a management request sent by a network management unit, wherein the management request comprises configuration information of a base station, the configuration information comprises at least one of a deployment mode and a virtualization mode, and the deployment mode comprises a non-split mode or a split mode; and
a processing unit, configured to configure the base station based on the configuration information received by the receiving unit.

14. The apparatus according to claim 13, wherein the processing unit configures, based on the configuration information, the base station in the following manner:
if the configuration information comprises the deployment mode, the deployment mode is the split mode, and the split mode comprises a mode in which the base station is split into a centralized unit and a distributed unit or a mode in which the base station is split into a centralized unit control plane, a centralized unit user plane, and a distributed unit, creating the base station, the centralized unit, and the distributed unit; or creating, by the network function management unit, the base station, the centralized unit control plane, the centralized unit user plane, and the distributed unit.

15. The apparatus according to claim 14, wherein the management request further comprises a component identifier, and a component corresponding to the component identifier comprises at least one of the centralized unit and the distributed unit; or a component corresponding to the component identifier comprises at least one of the centralized unit control plane, the centralized unit user plane, and the distributed unit; and
the processing unit configures, based on the configuration information, the base station in the following manner:
configuring the component identifier for the base station, and associating the base station with the component corresponding to the component identifier.

16. The apparatus according to claim 13, wherein the processing unit configures, based on the configuration information, the base station in the following manner:
creating the base station if the configuration information comprises the deployment mode and the deployment mode is the non-split mode.

17. The apparatus according to any one of claims 13 to 16, wherein when the configuration information comprises the virtualization mode and the virtualization mode is a component virtualization mode,
the management request further comprises a virtualized network function instance identifier, and there is an association relationship between the virtualized network function instance identifier and a component corresponding to the component virtualization mode; and
the component corresponding to the component virtualization mode comprises at least one of the centralized unit and the distributed unit; or the component corresponding to the component virtualization mode comprises at least one of the centralized unit control plane, the centralized unit user plane, and the distributed unit; and
the processing unit configures, based on the configuration information, the base station in the following manner:
creating a base station component, configuring, based on the association relationship, the virtualized network function instance identifier for the created base station component, and associating the created base station component with a virtualized network function instance corresponding to the virtualized network function instance identifier.

18. The apparatus according to claim 17, wherein the base station component created by the processing unit comprises a type of the base station component; and
the type of the base station component comprises at least one of the centralized unit and the distributed unit; or the type of the base station component comprises at least one of the centralized unit control plane, the centralized unit user plane, and the distributed unit.

19. The apparatus according to any one of claims 13 to 18, wherein the apparatus further comprises a sending unit, and the sending unit is configured to:
send, after the processing unit configures the base station based on the configuration information, base station information to the network management unit, wherein the base station information comprises an identifier of the created base station and the component identifier; and
the component corresponding to the component identifier comprises at least one of the centralized unit and the distributed unit; or
the component corresponding to the component identifier comprises at least one of the centralized unit control plane, the centralized unit user plane, and the distributed unit.

20. Abase station configuration apparatus, comprising:
a processing unit, configured to determine configuration information of a base station, wherein the configuration information comprises at least one of a deployment mode and a virtualization mode, and the deployment mode comprises a non-split mode or a split mode; and
a sending unit, configured to send a management request to a network function management unit, wherein the management request comprises the configuration information determined by the processing unit.

21. The apparatus according to claim 20, wherein when the configuration information comprises the deployment mode and the deployment mode is the split mode, the split mode comprises a mode in which the base station is split into a centralized unit and a distributed unit or a mode in which the base station is split into a centralized unit control plane, a centralized unit user plane, and a distributed unit.

22. The apparatus according to claim 21, wherein the management request further comprises a component identifier; and
the component corresponding to the component identifier comprises at least one of the centralized unit and the distributed unit; or
the component corresponding to the component identifier comprises at least one of the centralized unit control plane, the centralized unit user plane, and the distributed unit.

23. The apparatus according to any one of claims 20 to 22, wherein when the configuration information comprises the virtualization mode and the virtualization mode is a component virtualization mode,
the management request further comprises a virtualized network function instance identifier, and there is an association relationship between the virtualized network function instance identifier and a component corresponding to the component virtualization mode; and
the component corresponding to the component virtualization mode comprises at least one of the centralized unit and the distributed unit; or the component corresponding to the component virtualization mode comprises at least one of the centralized unit control plane, the centralized unit user plane, and the distributed unit.

24. The apparatus according to any one of claims 20 to 23, wherein the apparatus further comprises a receiving unit, and the receiving unit is configured to:
receive, after the sending unit sends the management request to the network function management unit, base station information sent by the network function management unit, wherein the base station information comprises an identifier of a created base station and the component identifier; and
the component corresponding to the component identifier comprises at least one of the centralized unit and the distributed unit; or
the component corresponding to the component identifier comprises at least one of the centralized unit control plane, the centralized unit user plane, and the distributed unit.

25. A computer-readable storage medium, wherein the computer-readable storage medium stores a computer instruction, and when run on a computer, the instruction is used to perform the method according to any one of claims 1 to 12.

26. A computer program product, wherein the computer program product comprises a computer program, and the computer program is used to perform the method according to any one of claims 1 to 12.

27. Abase station management device, comprising a memory and a processor, wherein
the memory is configured to store a program instruction; and
the processor is configured to invoke the program instruction stored in the memory, to perform the base station configuration method according to any one of claims 1 to 7.

28. Abase station management device, comprising a memory and a processor, wherein
the memory is configured to store a program instruction; and
the processor is configured to invoke the program instruction stored in the memory, to perform the base station configuration method according to any one of claims 8 to 12.

29. A communications system, comprising a network management unit and a network function management unit, wherein
the network management unit is configured to: determine configuration information of a base station, wherein the configuration information comprises at least one of a deployment mode and a virtualization mode, and the deployment mode comprises a non-split mode or a split mode; and send a management request to the network function management unit, wherein the management request comprises the configuration information; and
the network function management unit is configured to: receive the management request sent by the network management unit, and configure the base station based on the configuration information.

30. Abase station configuration method, comprising:
determining, by a network management unit, configuration information of a base station;
sending, by the network management unit, a management request to a network function management unit, wherein the management request comprises the configuration information; and
receiving, by the network function management unit, the management request sent by the network management unit, and configuring the base station based on the configuration information, wherein
the configuration information comprises at least one of a deployment mode and a virtualization mode, and the deployment mode comprises a non-split mode or a split mode.
